# EUROPEAN PATENT APPLICATION

(11) **EP 3 142 388 A1**
(43) Date of publication of application: **15.03.2017**
(21) Application number: 16184976.5
(22) Date of filing: 19.08.2016
(51) Int. Cl.: H04R 25/00, G10L 25/78, H04W 52/02

(54) **METHOD FOR INCREASING BATTERY LIFETIME IN A HEARING DEVICE**

(30) Priority: 26.08.2015 EP 15182598
(71) Applicant: Oticon A/S, 2765 Smørum (DK)
(72) Inventor: THOMSEN, Anders Højsgaard, DK-2765 Smørum (DK)
(74) Representative: William Demant

(57) **Abstract**

The disclosure relates to a method for extending the battery lifetime in a hearing device, and to a hearing device with means for extending the battery lifetime of the hearing device. The hearing device comprises an amplifier (4) providing an output signal and a controllable maximum power output limiter (5) configured to limit the output signal from the amplifier (4) when the output signal form the amplifier (4) exceeds a predefined threshold: the hearing device further comprises a speech detector (7) providing a control signal (8) to the controllable maximum power output limiter (5), where the speech detector (7) is further provided with an input terminal for receiving an input signal, such as the signal provided by a microphone (1). The controllable maximum power output limiter (5) is further configured to reduce the maximum power output of the amplifier (4) only when the speech detector (7) does not detect the presence of a speech signal in the input signal received by the speech detector (7), and where the maximum power output reduction is frequency dependent.

## Description

The present disclosure generally relates to methods for extending the lifetime of batteries in hearing devices, such as hearing aids, and more specifically to such methods and hearing devices that achieve the extension of battery lifetime by means of a reduction of the maximum power output of such hearing devices.

### BACKGROUND

Battery lifetime of a hearing aid is a critical parameter for end-user satisfaction. This is not only due to the cost of new batteries, but also to problems associated with changing batteries too often.

Current solutions, when battery low is detected, is to reduce the maximum power output (MPO) of the hearing aid. Especially in connection with power fittings this may lead to reduced audibility of the important speech signals as just a few dB reduction of maximum power output of the hearing aid may have detrimental consequences on the audibility of speech cues as well as on the general sound quality of speech.

It is consequently desirable to provide more advanced battery management systems that will result in a more user-friendly way of extending the lifetime of the battery in a hearing aid.

### SUMMARY

According to the present disclosure, the above and further objects and advantages are obtained by a method and hearing device, such as a hearing aid, where reduction of maximum power output of the hearing device in order to extend battery lifetime is made dependent on whether or not speech is present in the signal picked up by the hearing device.

In an embodiment of the present disclosure the above function is implemented by combining a battery low detector (which is present in many prior art hearing aids) with a speech activation detector such that the maximum power output is only reduced when the speech activation detector does not detect the presence of a speech signal.

According to the present disclosure, the maximum power output reduction may be made frequency dependent. In an embodiment, the frequency dependency of maximum power output reduction is weighted with the speech articulation index to avoid reduction of MPO in frequency ranges where the speech information is at a maximum.

According to a first aspect of the present disclosure there is provided a method for extending the battery lifetime in a hearing device, such as a hearing aid, where the method comprises:
- providing and input signal;
- detecting if a speech signal is present in the input signal;
- if a speech signal is not detected in the input signal, reducing the maximum power output of the hearing device;
whereby the battery lifetime of the hearing device is increased.

In an embodiment of the first aspect, the maximum power output is only reduced, when it is established that the battery is close to being discharged.

In an embodiment of the first aspect, the maximum power output reduction is frequency independent.

In an embodiment of the first aspect, the maximum power output reduction is frequency dependent.

In an embodiment of the first aspect, the frequency dependency of maximum power output reduction is weighted with the speech articulation index, whereby reduction of maximum power output in frequency ranges where the speech information is at a maximum is avoided.

According to a second aspect of the present disclosure there is provided hearing device, such as a hearing aid, comprising:
- an amplifier providing an output signal;
- a controllable maximum power output limiter configured to limit the output signal from the amplifier when the output signal form the amplifier exceeds a predefined threshold;
- a speech detector providing a control signal to the controllable maximum power output limiter, where the speech detector is further provided with an input terminal for receiving an input signal;
where the controllable maximum power output limiter is further configured to reduce the maximum power output of the amplifier only when the speech detector does not detect the presence of a speech signal in the input signal received by the speech detector.

In an embodiment of the second aspect, the hearing device further comprises:
- a battery low indicator configured to monitor the voltage on a battery in the hearing device and to provide an output signal indicating that the battery voltage is below a predefined minimum;
where the maximum power output limiter is configured to receive the output signal provided by the battery low detector and to limit the output signal from the amplifier only when the output signal is received.

In an embodiment of the second aspect, the maximum power output reduction is frequency independent.

In an embodiment of the second aspect, the maximum power output reduction is frequency dependent.

In an embodiment of the second aspect the frequency dependency of maximum power output reduction is weighted with the speech articulation index, whereby reduction of maximum power output in frequency ranges where the speech information is at a maximum is avoided.

### BRIEF DESCRIPTION OF DRAWINGS

The aspects of the disclosure may be best understood from the following detailed description taken in conjunction with the accompanying figures. The figures are schematic and simplified for clarity, and they show details to improve the understanding of the claims, while other details may be left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
Figure 1, shows a schematic block diagram of a first embodiment of the present disclosure;
Figure 2, shows a schematic block diagram of a second embodiment of the present disclosure; and
Figure 3, shows a flow chart of an embodiment of the method according to the present disclosure.

### DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practised without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include microprocessors, microcontrollers, digital signal processors (DSPs), field programmable gate arrays (FPGAs), programmable logic devices (PLDs), gated logic, discrete hardware circuits, and other suitable hardware configured to perform the various functionality described throughout this disclosure. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

A hearing device may include a hearing aid that is adapted to improve or augment the hearing capability of a user by receiving an acoustic signal from a user's surroundings, generating a corresponding audio signal, possibly modifying the audio signal and providing the possibly modified audio signal as an audible signal to at least one of the user's ears. The "hearing device" may further refer to a device such as an earphone or a headset adapted to receive an audio signal electronically, possibly modifying the audio signal and providing the possibly modified audio signals as an audible signal to at least one of the user's ears. Such audible signals may be provided in the form of an acoustic signal radiated into the user's outer ear, or an acoustic signal transferred as mechanical vibrations to the user's inner ears through bone structure of the user's head and/or through parts of middle ear of the user or electric signals transferred directly or indirectly to cochlear nerve and/or to auditory cortex of the user.

In general, a hearing device includes i) an input unit such as a microphone for receiving an acoustic signal from a user's surroundings and providing a corresponding input audio signal, and/or ii) a receiving unit for electronically receiving an input audio signal. The hearing device further includes a signal processing unit for processing the input audio signal and an output unit for providing an audible signal to the user in dependence on the processed audio signal.

The input unit may include multiple input microphones, e.g. for providing direction-dependent audio signal processing. Such directional microphone system is adapted to enhance a target acoustic source among a multitude of acoustic sources in the user's environment. In one aspect, the directional system is adapted to detect (such as adaptively detect) from which direction a particular part of the microphone signal originates. This may be achieved by using conventionally known methods. The signal processing unit may include amplifier that is adapted to apply a frequency dependent gain to the input audio signal. The signal processing unit may further be adapted to provide other relevant functionality such as compression, noise reduction, etc. The output unit may include an output transducer such as a loudspeaker/ receiver for providing an air-borne acoustic signal transcutaneously or percutaneously to the skull bone or a vibrator for providing a structure-borne or liquid-borne acoustic signal. In some hearing devices, the output unit may include one or more output electrodes for providing the electric signals such as in a cochlear implant.

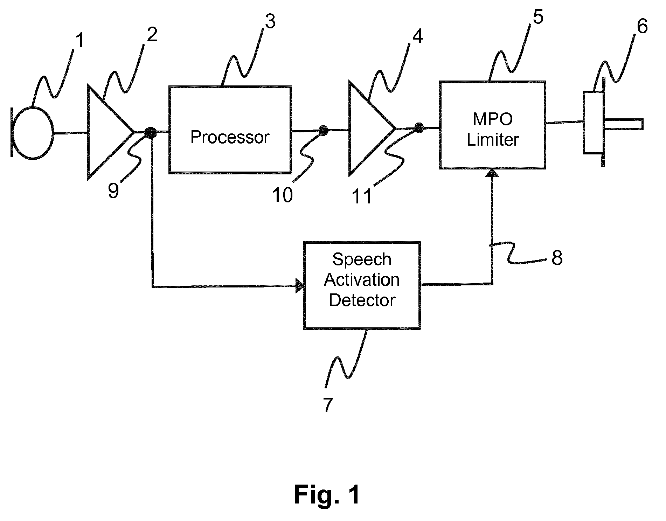

Referring to figure 1 there is shown a first embodiment of a hearing device according to the present disclosure, comprising a microphone 1, the output signal of which is amplified in a preamplifier 2. The pre-amplified microphone signal provided by the pre-amplifier 2 is processed in a processor 3 that for instance provides the necessary frequency dependent compensation for a user's specific hearing loss. The processed signal from processor 3 is provided to an output amplifier 4, the output signal of which is provided to a controllable maximum output limiter 5. The output signal form the limiter 5 is finally provided to an output transducer 6.

The maximum output limiter 5 receives a control signal 8 from the speech activation detector 7. The input signal to the speech activation detector 7 can be obtained at various nodes in the circuit. Three such possible nodes are indicated by reference numerals 9, 10 and 11, respectively.

The maximum power output limiter is in an embodiment frequency independent, i.e. it reduces the MPO by a given number of dB at all frequencies that are reproduced by the hearing device.

However, the MPO reduction may alternatively be made frequency dependent. In an embodiment, the frequency dependency of maximum power output reduction is weighted with the speech articulation index to avoid reduction of MPO in frequency ranges where the speech information is at a maximum.

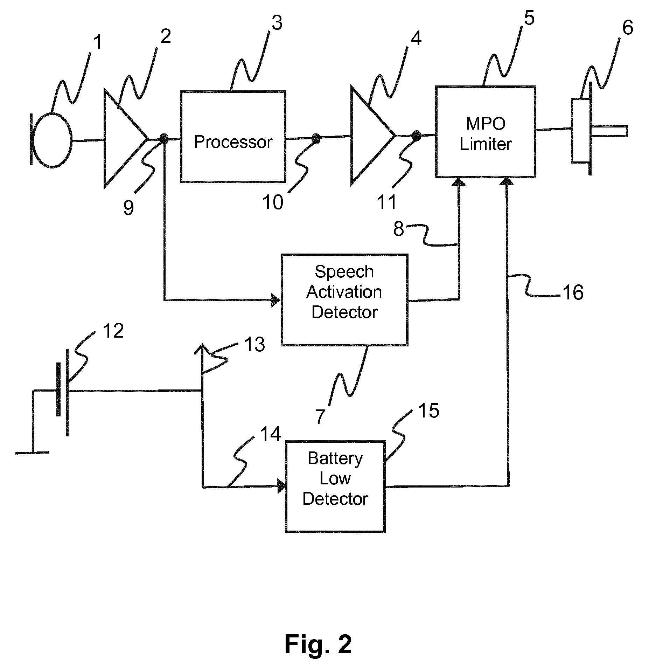

Referring to figure 2 there is shown a second embodiment of a hearing device, according to the present disclosure, comprising the same functional units as in the embodiment shown in figure 1, but with the addition of a battery low detector 15 that provides a battery low signal 16 when the voltage across the battery 12 drops below a predefined threshold. Reference numeral 13 indicates schematically the battery connection to the various circuits of the hearing device. The maximum power output limiter 5 is in this embodiment provided with two control inputs, one for receiving the output signal from the speech activation detector 7 and one for receiving the output from the battery low detector 15. This enables the maximum power output limiter 5 to only limit the output signal from the amplifier 4 when the speech activation detector does not detect a speech signal in the microphone signal AND the voltage on the battery 12 is below the predetermined threshold.

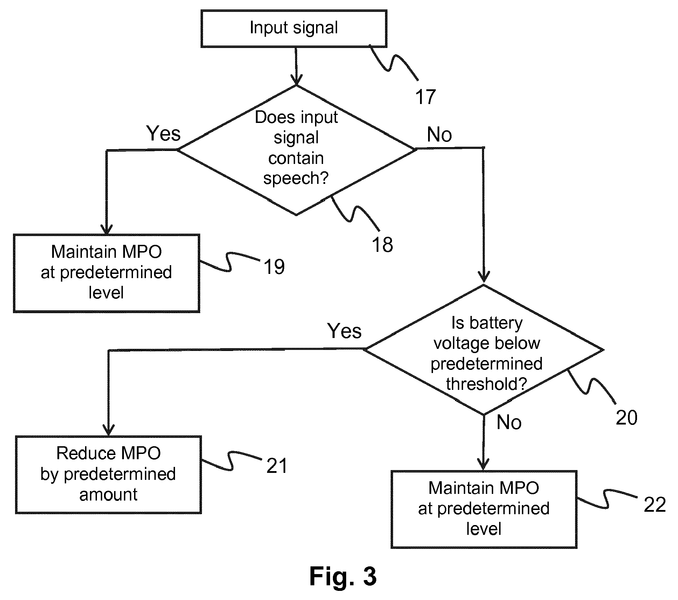

Referring to figure 3 there is shown a flow chart of a non-limiting embodiment of the method according to the present disclosure. In step 17 an input signal is provided, for instance from a hearing aid microphone (after suitable processing) as shown in figures 1 and 2. In step 18 it is determined, for instance by means of a speech activation detector, whether or not the input signal contains speech. If the input signal does contain speech, no MPO reduction is carried out as indicated in step 19. If the input signal does not contain speech it is determined in step 20 whether the battery voltage is below a predetermined threshold and it this is not the case, i.e. the battery power is still sufficiently high, no MPO reduction is carried out as indicated in step 22. If on the contrary it is determined in step 20 that the battery voltage is below the threshold, MPO is reduced by a predetermined amount as indicated in step 21.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects.

The claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more.

Accordingly, the scope should be judged in terms of the claims that follow.

## Claims

1. A method for extending the battery lifetime in a hearing device, such as a hearing aid, where the method comprises:
- providing an input signal;
- detecting if a speech signal is present in the input signal;
- if a speech signal is not detected in the input signal, reducing the maximum power output of the hearing device, where the maximum power output reduction is frequency dependent;
whereby the battery lifetime of the listening device is increased

2. A method according to claim 1, where the maximum power output is only reduced, when it is established that the battery is close to being discharged.

3. A method according to any of the previous claims, where the frequency dependency of the maximum power output reduction is weighted with the speech articulation index, whereby reduction of the maximum power output in frequency ranges where the speech information is at a maximum is avoided.

4. A hearing device, such as a hearing aid, comprising:
- an amplifier (4) providing an output signal;
- a controllable maximum power output limiter (5) configured to limit the output signal from the amplifier (4) when the output signal from the amplifier (4) exceeds a predefined threshold;
- a speech detector (7) providing a control signal (8) to the controllable maximum power output limiter (5), where the speech detector (7) is further provided with an input terminal for receiving an input signal;
where the controllable maximum power output limiter (5) is further configured to reduce the maximum power output of the amplifier (4) only when the speech detector (7) does not detect the presence of a speech signal in the input signal received by the speech detector (7), and where the maximum power output reduction is frequency dependent.

5. A hearing device according to claim 4, further comprising:
- a battery low indicator (15) is configured to monitor the voltage on a battery (12) in the hearing device and to provide an output signal (16) indicating that the battery voltage is below a predefined minimum;
where the maximum power output limiter (5) is configured to receive the output signal (16) provided by the battery low detector (15) and to limit the output signal from the amplifier (4) only when the output signal (16) is received.

6. A hearing device according to claim 4 or 5, where the frequency dependency of the maximum power output reduction is weighted with the speech articulation index, whereby reduction of the maximum power output in frequency ranges where the speech information is at a maximum is avoided.
